**Europäisches Patentamt**

**European Patent Office**

**Office européen des brevets**

(11) Numéro de publication : **0 410 532 B1**

(12)

# FASCICULE DE BREVET EUROPEEN

(45) Date de publication du fascicule du brevet :
**29.03.95 Bulletin 95/13**

(51) Int. Cl.$^6$ : **H04L 27/22**

(21) Numéro de dépôt : **90202008.0**

(22) Date de dépôt : **23.07.90**

(54) **Procédé de synchronisation par corrélation.**

(30) Priorité : **28.07.89 FR 8910188**

(43) Date de publication de la demande :
**30.01.91 Bulletin 91/05**

(45) Mention de la délivrance du brevet :
**29.03.95 Bulletin 95/13**

(84) Etats contractants désignés :
**DE FR GB IT SE**

(56) Documents cités :
**EP-A- 0 091 167**
**US-A- 4 238 739**

(73) Titulaire : **TELECOMMUNICATIONS
RADIOELECTRIQUES ET TELEPHONIQUES
T.R.T.
88 rue Brillat Savarin
F-75640 Paris Cédex 13 (FR)**
(84) **FR**
Titulaire : **Philips Electronics N.V.
Groenewoudseweg 1
NL-5621 BA Eindhoven (NL)**
(84) **DE GB IT SE**

(72) Inventeur : **Crebouw, Jean-Luc
Société Civile S.P.I.D.,
156 Boulevard Haussmann
F-75008 Paris (FR)**

(74) Mandataire : **Chaffraix, Jean et al
Société Civile S.P.I.D.
156, Boulevard Haussmann
F-75008 Paris (FR)**

## Description

La présente invention concerne un procédé de synchronisation par corrélation, procédé impliquant une première étape de réception pendant laquelle des données de synchronisation représentant une séquence de synchronisation modulant une fréquence porteuse sont reçues et des étapes de corrélations partielles où l'on effectue la corrélation des données reçues avec des parties de la séquence de synchronisation engendrée localement afin de fournir à l'utilisateur un pic de corrélation.

L'invention trouve d'importantes applications surtout dans le domaine des transmissions de données par voie radioélectrique où les contraintes sont sévères du fait des fortes perturbations auxquelles sont soumises ces voies.

Le brevet français n°2 525 055 décrit un tel procédé qui satisfait toutes les exigences en ce qui concerne la précision de la synchronisation. Cependant il s'est avéré que la charge de calcul était trop élevée pour certaines applications.

L'invention propose un procédé qui implique moins de calculs de sorte que lorsque la mise en oeuvre du procédé est exécutée par un ensemble à microprocesseur, celui-ci peut être affecté à des tâches supplémentaires.

Pour cela, un procédé du genre mentionné dans le préambule est remarquable en ce que dans la première étape N sous-échantillons de chaque donnée de synchronisation sont formés selon N positions et en ce qu'il comporte les étapes supplémentaires suivantes : une deuxième étape consistant à effectuer N corrélations partielles des sous-échantillons avec des parties de la séquence de synchronisation engendrée localement, une troisième étape consistant à déterminer la meilleure position (iopt) des sous-échantillons donnant la meilleure corrélation parmi les N effectuées durant la deuxième étape, une quatrième étape consistant à effectuer une seconde corrélation à partir des sous-échantillons de la meilleure position avec une autre partie de la séquence de synchronisation engendrée localement, une cinquième étape consistant à fournir une indication d'erreur à partir de la meilleure corrélation de la troisième étape et de la seconde corrélation, une sixième étape pour déphaser les données selon l'indication d'erreur de ladite cinquième étape.

La description suivante accompagnée des dessins ci-annexés, le tout donné à titre d'exemple non limitatif, fera bien comprendre comment l'invention peut être réalisée.

La figure 1 est un schéma montrant un récepteur permettant la mise en oeuvre du procédé de l'invention.

La figure 2 illustre une trame de données transmises.

La figure 3 est un schéma fonctionnel pour expliquer le fonctionnement de la synchronisation en mode de veille.

La figure 4 montre l'engendrement d'un vecteur d'erreur de fréquence à partir de l'indication d'erreur établie durant la troisième étape.

La figure 5 montre la correction de fréquence apportée pour effectuer la corrélation totale.

La figure 6 est un schéma fonctionnel pour expliquer le fonctionnement de la synchronisation en mode trafic.

La figure 7 montre comment les indications d'erreur peuvent être utilisées pour compenser les erreurs de fréquence de la porteuse reçue.

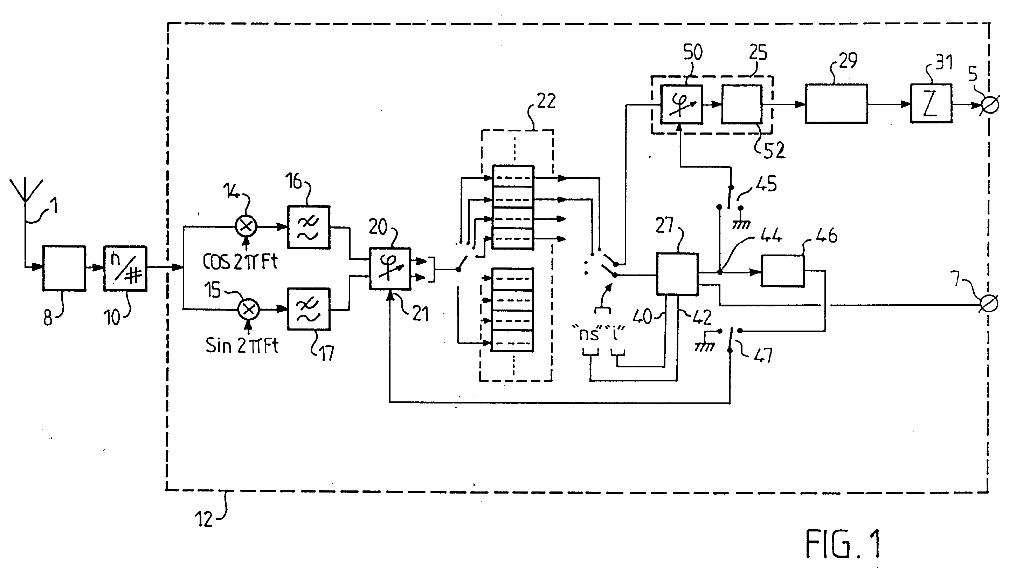

A la figure 1, la référence 1 indique une antenne qui reçoit des données transmises dans la gamme hf, c'est-à-dire dans une gamme allant entre 1 MHz et 30 MHz par exemple. Les données utilisées pour la synchronisation sont bivalentes une première valeur est représentée par une phase de 0 degré d'une sous-porteuse à 1800 Hz et une seconde par une phase de 180 degrés de cette même porteuse. En d'autres termes, les données ont pour valeurs au départ : +1 et -1.

Par suite de la transmission, ces valeurs vont subir des fluctuations d'amplitude et de phase et même vont s'interpénétrer. Le récepteur montré à la figure 1 fournit à la borne de sortie 5 des données débarrassées, dans la mesure du possible, de ces fluctuations et de cette interpénétration.

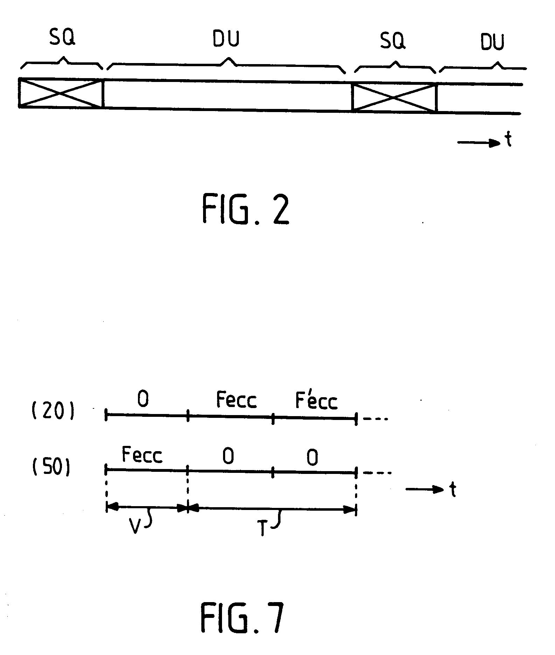

A la figure 2, on a représenté schématiquement une trame de données reçues. Ainsi, les données de synchronisation sont représentées par une séquence SQ ; après cette séquence, les données utiles DU. Seules, ces données DU apparaissent sur la borne 5. A la borne 7 surgit un signal indiquant qu'une séquence de données de synchronisation a été reçue.

A la figure 1, la référence 8 indique la partie réception du récepteur. A sa sortie, on a les données transmises par la sous-porteuse. Un convertisseur analogique-numérique 10 fournit des sous-échantillons numériques à une cadence N fois plus rapide que la transmission des données. C'est-à-dire que pour une donnée transmise, on aura N sous-échantillons. Pour la suite de l'exposé, N sera pris égal à 4.

Un ensemble à microprocesseur 12 effectue un traitement sur ces échantillons pour fournir les informations utiles aux bornes 5 et 7. Pour des raisons de clarté, cet ensemble est montré sous forme de schéma blocs, mais il est évident pour un homme de l'art de transformer ce schéma en blocs fonctionnels interprétables

2

par un microprocesseur. Les échantillons à la sortie du convertisseur 10 sont tout d'abord démodulés à la fréquence nominale de la sous-porteuse à 1800 Hz. Pour cela, deux organes de multiplication 14 et 15 sont utilisés suivis de deux filtres passe-bas 16 et 17 de sorte qu'à leur sortie on fait apparaître la partie réelle et la partie imaginaire respectivement, en bande de base, des données transmises. L'organe 14 multiplie les échantillons par cos $2\pi Ft$ et l'organe 15 par sin $2\pi Ft$ où F est la fréquence de la sous-porteuse. La grandeur complexe ainsi élaborée est soumise ensuite à l'action d'un organe de déphasage 20 qui la déphase selon une grandeur appliquée à son entrée de commande de déphasage 21. Les échantillons, partie réelle et partie imaginaire, à la sortie de l'organe 20 sont emmagasinés systématiquement aux quatre positions (correspondant à la valeur N) successives d'une mémoire tampon 22 à adressage circulaire, cette mémoire pouvant contenir une centaine de données. Cette mémoire sera adressée en lecture pour le traitement qui va être décrit par un numéro de symbole "ns" qui définit la donnée et un numéro d'indice "i" qui définit la position du sous-échantillon. Ainsi des sous-échantillons contenus dans cette mémoire 22 peuvent être prélevés de façon sélective par un organe d'entrée d'égaliseur 25, d'une part, et par un organe de synchronisation 27, d'autre part. La sortie de l'organe 25 est reliée à l'entrée d'un égaliseur 29 suivi d'un organe de décision 31 pour fournir les données à la borne 5.

L'organe de synchronisation 27 fournit, non seulement sur la borne 7 le pic indiquant qu'une séquence de données de synchronisation a été reçue, ainsi que cela a été dit, mais fournit en plus :
- sur une sortie 40, une valeur d'indice, accompagnée du numéro,de symbole pour indiquer le numéro du sous-échantillon à considérer par l'organe 25,
- sur une sortie 42, une autre valeur d'indice, accompagnée du numéro de symbole pour son traitement propre, et
- sur une sortie 44, une erreur de phase pour être utilisée soit par l'organe 25 via un commutateur 45, soit par un filtre 46. La sortie de ce filtre 46 est reliée à l'organe 20 via un commutateur 47. Cette erreur de phase représente la différence entre la valeur nominale de la sous-porteuse et la valeur de la sous-porteuse reçue, cette erreur pouvant être due à des effets doppler ou à des écarts de fréquence entre les porteuses.

L'organe d'entrée d'égaliseur 25 est formé d'un organe de déphasage 50 suivi d'un organe de normalisation 52 qui centre les valeurs des données pour que l'égalisation puisse s'effectuer dans les meilleures conditions possibles.

Le fonctionnement d'un tel récepteur se décompose en deux modes de travail. Un mode est dit le mode de veille pendant lequel une synchronisation est obtenue ce qui fait passer le récepteur dans le mode trafic. Les deux modes transmettent des données utiles.

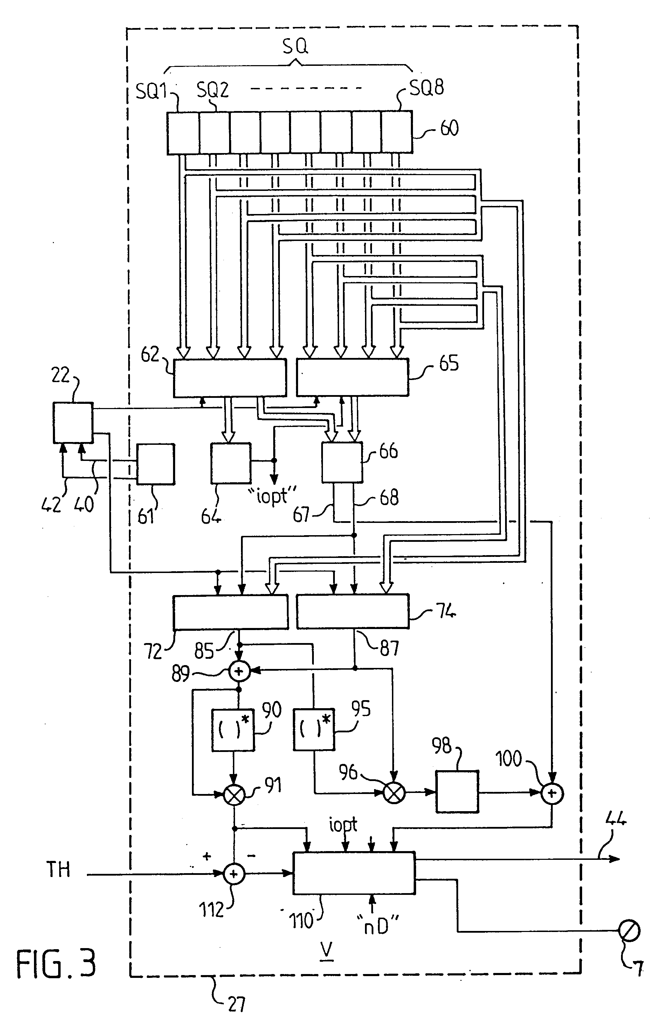

L'organe de synchronisation 27 représenté à la figure 3 sous forme de blocs fonctionnels est affecté au mode veille. Le bloc 60 représente la séquence des données S(k) du code de synchronisation SQ ayant par exemple 80 valeurs ; ce code est divisé en 8 parties SQ1, SQ2,..., SQ8 de 10 valeurs chacune. Les données reçues, prélevées dans la mémoire 22 au moyen d'un organe d'adressage 61 sont corrélées au moyen d'un organe représenté par un bloc 62 à ces différentes parties de blocs et selon un aspect de l'invention, ces corrélations ne sont effectuées que sur les parties SQ1 à SQ4. Un organe de sélection 64 détermine parmi les corrélations effectuées pour chacun des quatre sous-échantillons et pour chacune de ces parties celle qui donne le meilleur résultat.

Pour cela, on détermine le "i" qui rend maximum la formule suivante :

$$COR(i) = \sum_{n=1}^{4} [CORPAR(i,n)]^* \cdot CORPAR(i,n)$$

$i \in [1,4]$

la valeur de "i" qui donne ce maximum est appelée : "iopt". Dans cette formule l'* signifie qu'il faut considérer le conjugué de la quantité à laquelle il est affecté. D'autre part :

$$CORPAR(i,n) = \sum_{j=0}^{9} D(i,j+(n-1).10) \cdot S(j+(n-1).10)$$

$n \in [1,4]$

D(..,..) représente les données traitées.

La valeur "iopt" est utilisée par un bloc 65 pour effectuer des corrélations avec ces indices sur les parties de séquence SQ5 à SQ8. Toutes ces corrélations avec cette valeur servent pour calculer l'erreur de phase selon une méthode similaire à celle décrite dans le brevet précité. On obtient une fonction f(φ) :

$$f(\varphi) = \sum_{n=1}^{7} [CORPAR(iopt,n)]^* . CORPAR(iopt,n+1)$$

Par ailleurs, on peut montrer :

$$f(\varphi) = K.exp(10.\varphi)$$

où K est une constante.

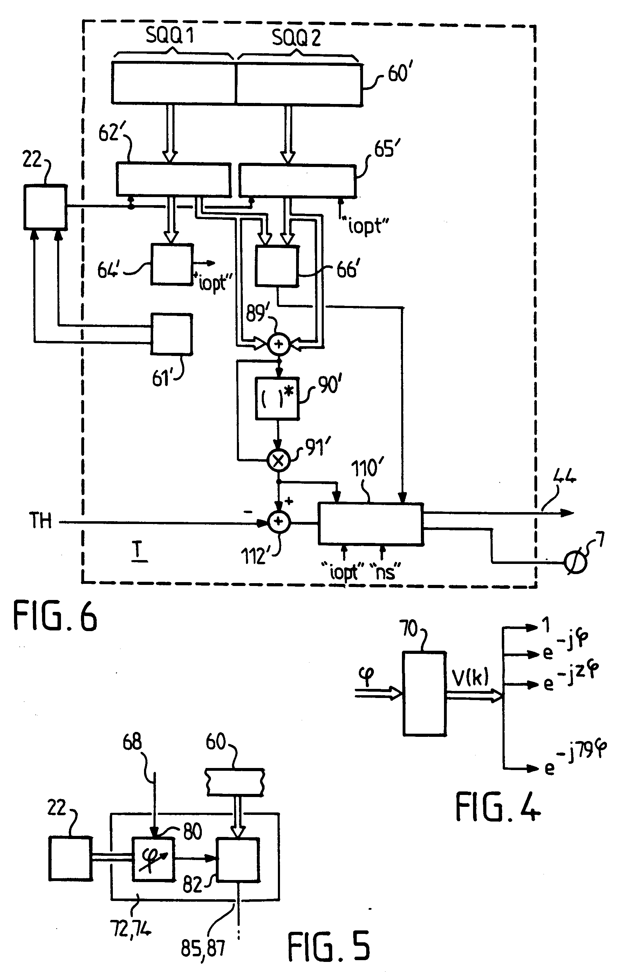

De cette valeur de φ on peut en dériver un vecteur $\vec{V}$ présentant une pluralité de composantes V(k) en appliquant la valeur de φ à une table 70 comme cela est représenté à la figure 4.

$$V(k) = exp(-j(k-1)\varphi)$$

$$k \in [1,80]$$

La valeur φ apparaît à la sortie 67 et le vecteur $\vec{V}$ à la sortie 68.

Deux blocs 72 et 74 effectuent une corrélation totale en opérant sur deux moitiés du code SQ. Chacun de ces blocs comporte, comme indiqué à la figure 5, un organe de déphasage 80 suivi d'un organe de corrélation 82 proprement dit ; l'organe 80 a sa commande de déphasage reliée à la sortie 68 pour déphaser les données prélevées dans la mémoire 22. Ainsi cette corrélation va s'effectuer dans de bonnes conditions puisque l'écart de fréquence est déjà corrigé.

Les corrélations effectuées par les blocs 72 et 74 sont respectivement CORT(iopt,1) et CORT(iopt,2) données par :

$$CORT(iopt,1) = \sum_{K=1}^{40} D(iopt,k).S(k).V(k)$$

$$CORT(iopt,2) = \sum_{K=41}^{80} D(iopt,k).S(k).V(k)$$

La corrélation totale CORTOTAL effectuée sur toutes les valeurs S(k) du code de synchronisation est donnée par la somme des corrélations exécutées par les blocs 72 et 74.

$$CORTOTAL = CORT(iopt,1) + CORT(iopt,2)$$

Cette somme est faite par l'additionneur 89.

On détermine le carré du module de CORTOTAL au moyen des éléments 90 et 91 qui l'un prend la quantité conjuguée de CORTOTAL et l'autre multiplie entre elles ces valeurs. On évalue aussi la quantité suivante au moyen d'un élément 95 pour déterminer la valeur conjuguée de CORT(iopt,1) et d'un multiplieur 96.

$$[CORT(iopt,1)]^* . CORT(iopt,2)$$

Cette quantité donne après traitement dans un organe 98 une phase qui additionnée à celle (sortie 67) préalablement calculée dans le bloc 66, au moyen d'un additionneur 100 améliore cette dernière d'une manière sensible.

Un bloc final 110 traite l'information à la sortie de l'élément 91 et aussi celle fournie par un organe de comparaison 112 pour prendre certaines mesures lorsqu'un pic de corrélation a été déterminé par l'organe 112 qui compare la valeur du module de CORTOTAL avec une valeur de seuil TH préalablement établie. Une de ces mesures consiste à définir la valeur "ns" pour laquelle la synchronisation a été détectée. Une autre mesure consiste à mémoriser la valeur de phase calculée en sortie de l'additionneur 100 et "iopt".

Une fois que la synchronisation a été obtenue, le récepteur passe en mode trafic pour la trame suivante. La synchronisation a alors un rôle de surveillance pour savoir si le code de synchronisation est toujours bien reconnu et aussi de surveiller la phase afin de corriger des écarts faibles de sous-porteuses toujours possibles. La figure 6 montre comment l'organe 27 est organisé pour ce mode.

Ici, le code de synchronisation est divisé en deux parties SQQ1 et SQQ2 dans un bloc 60'. Dans un bloc 62', on évalue les corrélations pour tous les indices "i" élaborés par l'organe d'adressage 61' avec la partie de code SQQ1 un organe 64' détermine comme en mode veille la valeur "iopt" de sorte que un bloc 65' calcule la corrélation pour ce "iopt" des données avec la demi-séquence SQQ2. A partir de ces deux corrélations, on détermine une valeur d'erreur de phase au moyen d'un organe 66 en prenant le conjugué de la corrélation donnée par 62′ et la corrélation par 65′. Puis la corrélation totale est calculée en additionnant celles obtenues par les organes 62′ et 66′. Le carré du module est obtenu, comme en mode veille au moyen des éléments 89′, 90′ et 91′ semblables aux éléments 89, 90 et 91 décrits à la figure 3. La synchronisation est détectée par l'organe de comparaison 112′ et le bloc final 110′ a la même fonction que le bloc 110. Pour ce bloc l'erreur de phase considérée est seulement celle fournie par l'organe 66′ à partir du conjugué de la corrélation fournie par le bloc 62′ et celle du bloc 65′.

A la figure 7, on montre comment les commutateurs 45 et 47 peuvent être manoeuvrés. Lorsqu'on est en veille, le commutateur 47 est mis dans une position telle que l'organe de déphasage 20 n'apporte aucune correction de phase, tandis que le commutateur 45 est mis dans une position qui permet à l'organe de déphasage 50 de recevoir déjà la première valeur trouvée Fecc. Puis dans une période suivante, on se trouve en mode trafic, les commutateurs 45 et 47 s'inversent de sorte que les valeurs d'erreur de phase filtrées Fecc, F′ecc sont appliquées à l'organe 20 à chaque période et plus aucune erreur de phase n'est appliquée à l'organe 50. Ainsi, on a fourni des données corrigées à l'égaliseur 29.

## Revendications

1. Procédé de synchronisation par corrélation, procédé impliquant une première étape de réception pendant laquelle des données de synchronisation représentant une séquence de synchronisation modulant une fréquence porteuse sont reçues et des étapes de corrélations partielles où l'on effectue la corrélation des données reçues avec des parties de la séquence de synchronisation engendrée localement afin de fournir à l'utilisateur un pic de corrélation, procédé caractérisé en ce que dans la première étape N sous-échantillons de chaque donnée de synchronisation sont formés selon N positions et en ce qu'il comporte les étapes supplémentaires suivantes :
   - une deuxième étape consistant à effectuer N corrélations partielles des sous-échantillons avec des parties de la séquence de synchronisation engendrée localement,
   - une troisième étape consistant à déterminer la meilleure position (iopt) des sous-échantillons donnant la meilleure corrélation parmi les N effectuées durant la deuxième étape,
   - une quatrième étape consistant à effectuer une seconde corrélation à partir des sous-échantillons de la meilleure position avec une autre partie de la séquence de synchronisation engendrée localement,
   - une cinquième étape consistant à fournir une indication d'erreur à partir de la meilleure corrélation de la troisième étape et de la seconde corrélation,
   - une sixième étape pour déphaser les données selon l'indication d'erreur de ladite cinquième étape.

2. Procédé de synchronisation par corrélation selon la revendication 1, caractérisé en ce qu'il comporte, en outre, les étapes suivantes :
   - une septième étape consistant à effectuer, ensuite, une troisième corrélation des sous-échantillons de la meilleure position avec toute la séquence engendrée localement,
   - une huitième étape consistant à fournir une indication d'erreur finale en combinant l'indication d'erreur de la cinquième étape avec les résultats de la troisième corrélation,
   - une neuvième étape pour déphaser les données selon l'indication d'erreur de ladite huitième étape et pour fournir le pic de corrélation audit utilisateur sur la base de la troisième corrélation.

## Patentansprüche

1. Verfahren zur Synchronisation durch Korrelation, wobei das Verfahren einen ersten Empfangsschritt einschließt, während dem die Synchronisationsdaten empfangen werden, die eine eine Trägerfrequenz modulierende Synchronisationsfolge darstellen, sowie Teilkorrelationsschritte einschließt, bei denen die Korrelation der empfangenen Daten mit den Teilen der lokal erzeugten Synchronisationsfolge durchgeführt wird, um dem Benutzer einen Korrelations-Peak zu liefern, dadurch gekennzeichnet, daß beim ersten Schritt N von jedem Synchronisationsdatenelement Teilabtastungen entsprechend N Positionen gebildet werden und das Verfahren die folgenden zusätzlichen Schritte beinhaltet:
   - einen zweiten Schritt, der darin besteht, N Teilkorrelationen der Teilabtastungen mit Teilen der lokal erzeugten Synchronisationsfolge vorzunehmen,
   - einen dritten Schritt, der darin besteht, die beste Position (iopt) der Teilabtastungen bestimmen, die die beste Korrelation unter den N während des zweiten Schrittes vorgenommenen Korrelationen ergibt,
- einen vierten Schritt, der darin besteht, eine zweite Korrelation auf der Basis der Teilabtastungen der besten Position mit einem anderen Teil der lokal erzeugten Synchronisationsfolge vorzunehmen,
- einen fünften Schritt, der darin besteht, auf der Basis der besten Korrelation des dritten Schrittes und der zweiten Korrelation eine Fehlerangabe zu liefern,
- einen sechsten Schritt zur Phasenverschiebung der Daten entsprechend der Fehlerangabe des genannten fünften Schrittes.

2. Verfahren zur Synchronisation durch Korrelation nach Anspruch 1, <u>dadurch gekennzeichnet</u>, daß es außerdem die folgenden Schritte umfaßt:
- einen siebten Schritt, der darin besteht, danach eine dritte Korrelation der Teilabtastungen der besten Position mit der ganzen lokalen erzeugten Folge vorzunehmen,
- einen achten Schritt, der darin besteht, eine Endfehlerangabe zu liefern, indem die Fehlerangabe des fünften Schrittes mit der Ergebnissen der dritten Korrelation kombiniert wird,
- einen neunten Schritt zur Phasenverschiebung der Daten entsprechend der Fehlerangabe des genannten achten Schrittes und zur Zuführung des Korrelations-Peaks an den genannten Benutzer auf der Basis der dritten Korrelation.

## Claims

1. A method of synchronization by correlation, which method comprises a first receiving stage in which synchronization data representing a synchronization sequence modulating a carrier frequency are received, and partial correlation stages in which data received are correlated with parts of the locally generated synchronization sequence in order to supply the user with a correlation peak, characterized in that during the first stage N sub-samples of each synchronization data are formed in N positions and in that it comprises the following supplementary stages:
- a second stage which consists in performing N partial correlations of the sub-samples with parts of the locally generated synchronization sequence,
- a third stage which consists in determining the best position (iopt) of the sub-samples producing the best correlation from among the N performed during the second stage;
- a fourth stage which consists in performing a second correlation on the basis of the sub-samples of the best position with another part of the locally generated synchronization sequence,
- a fifth stage which consists in supplying an error indication on the basis of the best correlation of the third and the second correlation,
- a sixth stage for dephasing the data in conformity with the error indication of said fifth stage.

2. A method of synchronization by correlation as claimed in Claim 1, characterized in that it also comprises the following stages:
- a seventh stage which consists in performing subsequently a third correlation of the sub-samples of the best position with the entire locally generated synchronization sequence,
- an eighth stage which consist in supplying a final error indication by combining the error indication of the fifth stage with the results of the third correlation,
- a ninth stage for dephasing the data in conformity with the error indication of said eighth stage and for supplying the correlation peak to said user on the basis of the third correlation.

FIG. 1

SQ · DU · SQ · DU

→ t

# FIG. 2

(20) · 0 · Fecc · F'ecc · ...

(50) · Fecc · 0 · 0 · ...

→ t

V · T

# FIG. 7

FIG.3

SQQ 1   SQQ 2

60'

62'

22

65'

"iopt"

64'   "iopt"

66'

89'

61'

( )*   90'

91'

110'   44

TH   7

112'   T

"iopt" "ns"

FIG. 6

70

1

$e^{-j\varphi}$

$\varphi$   V(k)   $e^{-j2\varphi}$

$e^{-j79\varphi}$

FIG. 4

68   60

22

80

$\varphi$

82

72,74   85,87   FIG. 5